# EUROPEAN PATENT SPECIFICATION

(11) **EP 2 611 120 B1**
(45) Date of publication and mention of the grant of the patent: **25.11.2015**
(21) Application number: 12194255.1
(22) Date of filing: 26.11.2012
(51) Int. Cl.: H04M 1/18, H04M 1/02, H04M 1/03

(54) **Transparent panel for mobile device, method for manufacturing the same, and mobile device using the same**
Transparente Tafel für mobile Vorrichtungen, Herstellungsverfahren dafür und mobile Vorrichtung dafür
Panneau transparent pour dispositif mobile, son procédé de fabrication et dispositif mobile utilisant celui-ci

(30) Priority: 26.12.2011 KR 20110142493
(43) Date of publication of application: 03.07.2013
(73) Proprietor: Samsung Display Co., Ltd., Gyeonggi-do (KR)
(72) Inventor: Ha, Chung Soo, Chungcheongnam-do (KR); Oh, Byung Chul, Chungcheongnam-do (KR)
(74) Representative: Mounteney, Simon James

(56) References cited:
- EP-A2- 1 879 363
- US-A1- 2003 184 894
- US-A1- 2011 222 300

## Description

### BACKGROUND

### 1. Field

Aspects of embodiments of the present invention relate to a mobile device comprising a transparent panel.

### 2. Description of the Related Art

A mobile device, such as a smart phone, a personal digital assistant (PDA), a portable multimedia player (PMP), a laptop computer or a tablet computer, includes a display panel that emits light in various ways and displays an image. Display panels may be classified according to the methods by which the display panels emit light. A variety of studies are being conducted competitively to effectively control brightness of light emitted for the respective light emitting methods and to improve display quality.

A front protection panel for protecting a front surface of the display panel while transmitting the light generated from the display panel to the outside is attached to the outer surface of the display panel. As an example of the front protection panel, a glass panel made of tempered glass is attracting considerable attention because it has excellent light transmissivity of 90% or greater and provides an aesthetically superb appearance while providing high scratch resistance, making the panel robust against damage due to foreign matter.

The mobile device, including the display panel having a front protection panel attached thereto can process a variety of multimedia data, including, for example, voice communication, and can output audio data to a user for transmitting information. To this end, the mobile device includes a speaker module connected to a circuit board to output a predetermined sound.

In a typical case where the speaker module is provided at an interior side of the front protection panel, in order to output sounds free of distortion or attenuation, a predetermined single hole is formed at one side of the front protection panel. In a case where the front protection panel is a transparent panel, stress is concentrated on the single hole, resulting in a reduction of rigidity and creation of cracks. In addition, external foreign materials infiltrate through the single hole in the transparent panel and into the device. US2011222300 discloses an illumination device including a light emitter; and a panel. EP1879363 discloses a mobile terminal that includes a frame having a front side and a rear side, the rear side having a first receiving space and a second receiving space located beside one another, a front cover disposed to at least partially cover the front side of the frame, the front cover having a transparent portion, a touch screen located between the front cover and the frame, the touch screen permitting transmission of a signal when the transparent portion is contacted, a camera located in one of the first and second receiving spaces, and a rear cover disposed to at least partially cover each of the first and second receiving spaces

### SUMMARY

According to an aspect of embodiments of the present invention, a mobile device comprising a transparent panel which has improved shock resistance by distributing external shocks and allows distortion-free audio data to pass through the same while preventing or substantially preventing infiltration of foreign materials. The transparent panel includes a plurality of microholes.

Also described is a method for manufacturing a transparent panel for a mobile device, which has improved shock resistance by distributing external shocks and allows distortion-free audio data to pass through the same while preventing or substantially preventing infiltration of foreign materials.

According to the present invention, a mobile device includes a transparent panel which has improved shock resistance by distributing external shocks and allows distortion-free audio data to pass through the same while preventing or substantially preventing infiltration of foreign materials.

The above and other aspects and objects of the present invention are described further herein or will be apparent to one of ordinary skill in the art from the following description of some embodiments thereof.

According to the present invention, the transparent panel includes a panel having a thickness (e.g., a predetermined thickness) and a plurality of microholes formed at a side of the panel, and a diameter of each of the microholes is from 50 to 500 µm (e.g. from 50 to 499 µm, such as from 100 to 400 µm, for example, from 150 to 300 µm, such as 200 µm).

According to the present invention, a mobile device includes a transparent panel having a thickness (e.g., a predetermined thickness) and a plurality of microholes formed at a side of the transparent panel, and a speaker module arranged at a side (e.g., a lower portion) of the transparent panel at a location corresponding to the plurality of microholes, and a diameter of each of the microholes is from 50 to 500 µm (e.g. from 50 to 499 µm, such as from 100 to 400 µm, for example, from 150 to 300 µm, such as 200 µm).

Also described is a method for manufacturing a transparent panel for a mobile device includes providing a transparent panel having a thickness (e.g., a predetermined thickness), forming a plurality of microholes at a side of the transparent panel by mechanical processing, and setting diameters of microholes of the plurality of microholes to be from 50 to 500 µm (e.g. from 50 to 499 µm, such as from 100 to 400 µm, for example, from 150 to 300 µm, such as 200 µm) by etching the transparent panel having the plurality of microholes using a chemical solution.

In the transparent panel for a mobile device, shock resistance is improved by distributing external shocks, audio data can pass through the panel without distortion, and infiltration of foreign materials is prevented or substantially prevented.

According to the present invention, a plurality of microholes is formed, thereby distributing stress transmitted due to external shocks to the plurality of microholes and preventing or substantially preventing cracks generated due to stress concentration. In addition, diameters of the microholes are appropriately controlled, thereby transmitting sounds generated within the microholes to the outside without attenuation while preventing or substantially preventing infiltration of foreign materials.

In addition, unlike the conventional transparent panel including a single hole with lack of variety, the transparent panel, including a plurality of microholes, provides an aesthetically pleasing design to the user.

A first aspect of the invention relates to a mobile device according to Claim 1. Further embodiments of this aspect are disclosed according to Claims 2 to 5.

### BRIEF DESCRIPTION OF THE DRAWINGS

The above and other aspects and principles of the present invention will become more apparent by describing in further detail some embodiments thereof with reference to the attached drawings, in which:
FIG. 1 is an exploded perspective view illustrating a configuration of a conventional mobile device;
FIGS. 2 to 4 illustrate a stress distribution and a crack outbreak process of the mobile device shown in FIG. 1;
FIG. 5 is an exploded perspective view illustrating configurations of a transparent panel for a mobile device and a mobile device according to an embodiment of the present invention;
FIGS. 6 and 7 illustrate microholes of the transparent panel for a mobile device shown in FIG. 5;
FIGS. 8 and 9 illustrate stress distributions of the transparent panel for a mobile device shown in FIG. 5;
FIG. 10 is a schematic partial cross-sectional view of an audio data propagation scheme of the transparent panel and mobile device shown in FIG. 5;
FIG. 11 is a schematic partial cross-sectional view of a foreign material blocking effect of the transparent panel and mobile device shown in FIG. 5;
FIG. 12 is a table showing results of ball falling tests conducted on the transparent panel for a mobile device shown in FIG. 5;
FIG. 13 schematically illustrates a transparent panel for a mobile device according to another embodiment of the present invention;
FIG. 14 is a flowchart of a method for manufacturing a transparent panel for a mobile device according to an embodiment of the present invention;
FIG. 15 is a photograph illustrating a task of the method for manufacturing a transparent panel shown in FIG. 14; and
FIG. 16 is a photograph illustrating another task of the method for manufacturing a transparent panel shown in FIG. 14.

### DETAILED DESCRIPTION

The present invention is described more fully hereinafter with reference to the accompanying drawings, in which some embodiments of the invention are shown. However, as those skilled in the art will realize, the described embodiments can be modified in various different ways, all without departing from the scope of the presently claimed invention. Accordingly, the drawings and description are to be regarded as illustrative in nature and not restrictive. Like reference numbers indicate like components throughout the specification. In the drawings, thicknesses of layers and regions are exaggerated for clarity.

It is to be understood that when a layer is referred to herein as being "on" another layer or substrate, it can be directly on the other layer or substrate, or intervening layers can also be present. In contrast, when an element is referred to as being "directly on" another element, there are no intervening elements present.

Spatially relative terms, such as "beneath," "below," "lower," "above," "upper," and the like, are used herein for ease of description to describe one element or feature's relationship to another element(s) or feature(s) as illustrated in the drawings. It will be understood that the spatially relative terms are intended to encompass different orientations of the device in use or operation in addition to the orientation depicted in the drawings. For example, if the device in the drawings is turned over, elements described as "below" or "beneath" other elements or features would then be oriented "above" the other elements or features. Thus, the term "below" can encompass both an orientation of above and below. The device can be otherwise oriented (e.g., rotated 90 degrees or at other orientations) and the spatially relative descriptors used herein interpreted accordingly.

The use of the terms "a," "an," "the," and similar referents in the context of describing the invention (especially in the context of the following claims) is to be construed to cover both the singular and the plural, unless otherwise indicated herein or clearly contradicted by context. The terms "comprising," "having," "including," and "containing" are to be construed as open-ended terms (i.e. meaning "including, but not limited to,") unless otherwise noted.

Unless defined otherwise, all technical and scientific terms used herein have the same meaning as commonly understood by one of ordinary skill in the art to which this invention belongs. It is noted that the use of any and all examples, or the use of defined terms provided herein is intended merely to better illustrate the invention and is not intended as a limitation on the scope of the invention unless otherwise specified. Further, unless defined otherwise, all terms defined in generally used dictionaries should not be overly interpreted.

The present invention is described herein with reference to perspective views, cross-sectional views, and/or plan views, in which some embodiments of the invention are shown. Thus, the profile of a view can be modified according to manufacturing techniques and/or allowances. That is, the embodiments of the invention are not intended to limit the scope of the present invention but, rather, cover all changes and modifications that are caused due to a change in manufacturing process. Thus, regions shown in the drawings are illustrated in schematic form and the shapes of the regions are presented simply by way of illustration and not as a limitation.

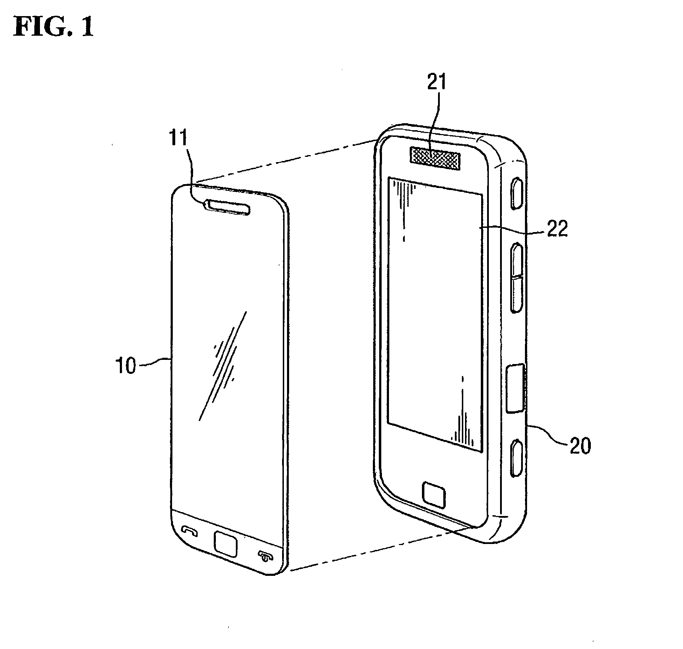

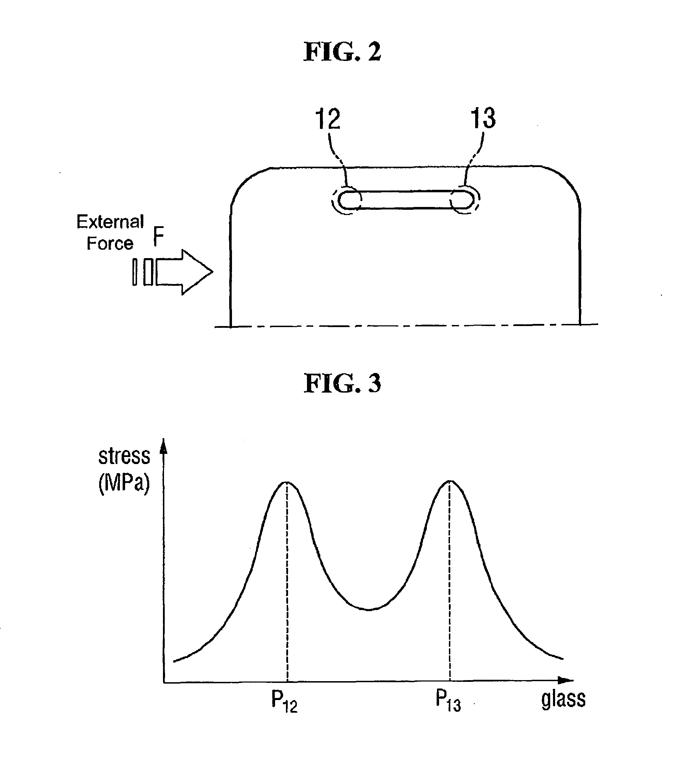

A transparent panel for a conventional mobile device and a mobile device including the transparent panel will be described with reference to FIGS. 1 to 4. FIG. 1 is an exploded perspective view illustrating a configuration of a conventional mobile device, and FIGS. 2 to 4 illustrate a stress distribution and a crack outbreak process of the mobile device shown in FIG. 1.

Referring to FIG. 1, the mobile device includes a transparent panel 10 installed on a front surface of its upper portion, and a main body 20 formed at one side (e.g., a lower portion) of the transparent panel 10.

As used herein, the term "mobile device" includes all types of devices capable of reproducing, generating or transmitting multimedia data, and examples thereof includes a mobile phone, such as a smart phone, a PDA, a PMP, an MP3 player, a laptop computer, a tablet computer, and the like. In particular, the mobile device includes, but is not limited to, a mobile device having built-in communication-related chips, such as CDMA or GSM, a mobile device having a voice communication function for transmitting/receiving voices to/from a called party using an internet protocol such as VoIP, and so on.

A single through-hole 11 is formed at one side of the transparent panel 10, a speaker module 21 is disposed at a location of the main body 20 corresponding to the through-hole 11, and a display panel 22 is formed at a region other than the speaker module 21. Visual data generated from the display panel 22 passes through the transparent panel 10 to be viewed by a user and acoustic data generated from the speaker module 21 passes through the through-hole 11 of the transparent panel 10 to be heard by the user.

Referring to FIGS. 2 to 4, the single through-hole 11 of the transparent panel 10 is configured such that stress concentrates at opposite ends 12 and 13 of a lengthwise axis of the through-hole 11 having a substantially elliptical shape when the mobile device is dropped or a shock is applied to the mobile device. As indicated by the graph shown in FIG. 3, the stress concentrates at positions P12 and P13 corresponding to the opposite ends 12 and 13.

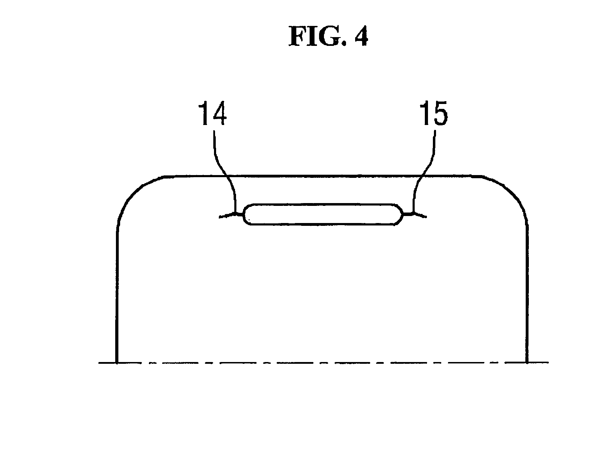

As shown in FIG. 4, if the stress of the transparent panel 10 exceeds a certain stress (e.g., a predetermined stress level) of the stress-concentrated positions 12 and 13, cracks 14 and 15 are generated around the positions 12 and 13. If the cracks 14 and 15 become severe, the transparent panel 10 can be entirely damaged.

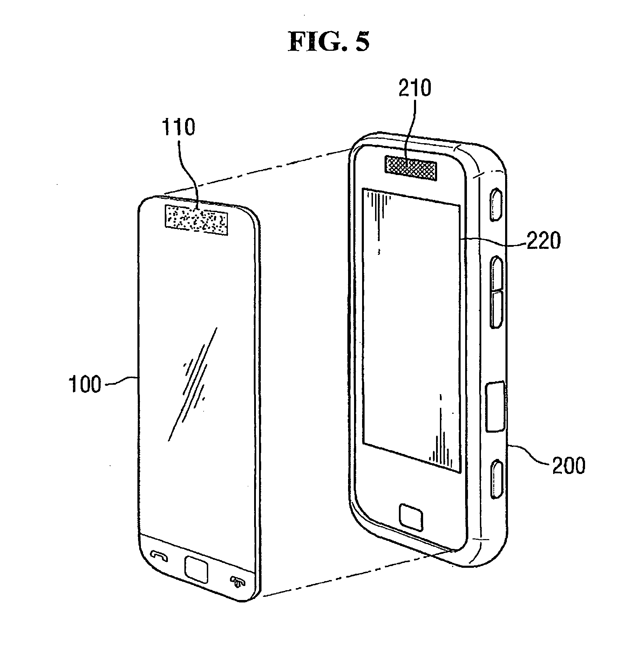

Configurations of a transparent panel for a mobile device and a mobile device according to an embodiment of the present invention are described below with reference to FIGS. 5 to 12.

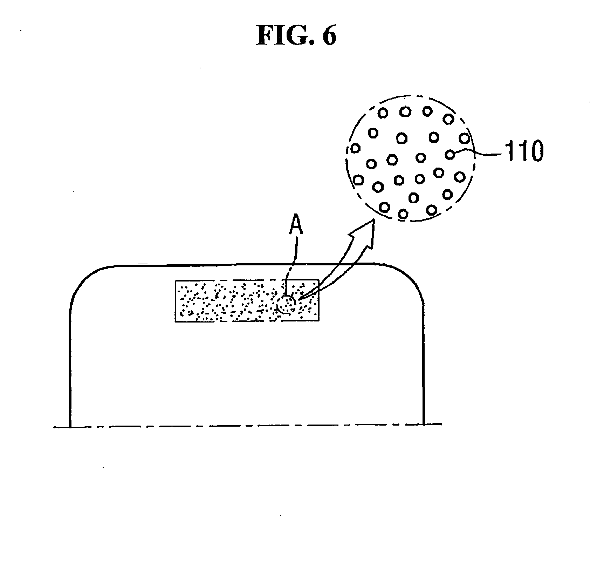

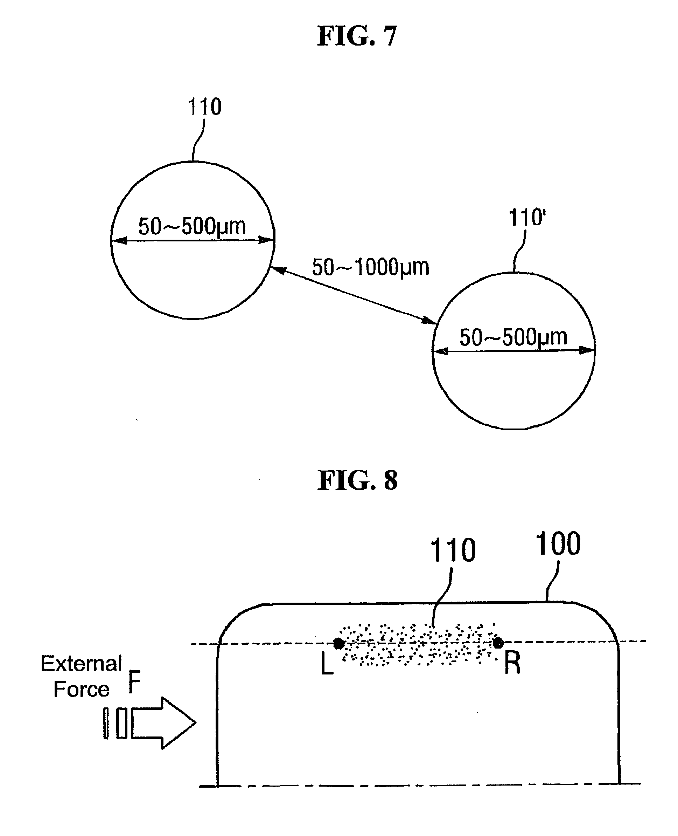

First, configurations of a transparent panel for a mobile device and a mobile device according to an embodiment of the present invention will be described with reference to FIGS. 5 to 7. FIG. 5 is an exploded perspective view illustrating configurations of a transparent panel for a mobile device, and a mobile device according to an embodiment of the present invention, and FIGS. 6 and 7 illustrate microholes of the transparent panel for the mobile device shown in FIG. 5.

The transparent panel 100, in one embodiment, is a glass panel having a thickness (e.g., a predetermined thickness) and includes a plurality of microholes 110 formed at a side of the transparent panel 100. Diameters of the microholes 110 are from 50 to 500 µm (e.g. from 50 to 499 µm, such as from 100 to 400 µm, for example, from 150 to 300 µm, such as 200 µm).

The transparent panel 100, in one embodiment, is made of a glass material having a certain transmissivity (e.g., a predetermined transmissivity level). The transparent panel 100, in one embodiment, is generally rectangular, but in other embodiments of the present invention, the shape is not limited to that illustrated herein. In addition, in a further embodiment, in view of aesthetic pleasure and safety, vertices of the transparent panel 100 are rounded.

The transparent panel 100 has the plurality of microholes 110. While the illustrated embodiment shows that the plurality of microholes 110 are formed at one side (that is, near a topmost edge in FIG. 5), the present invention does not limit the location of the plurality of microholes 110 to that illustrated herein. The plurality of microholes 110 can be formed at different locations of the transparent panel 100 according to the position of the speaker module 210 of the main body 200 arranged at one side (e.g., at a lower portion) of the transparent panel 100.

Any suitable material can be used for forming the transparent panel 100, without limitation, and examples thereof include a general glass material having SiO₂ as a main component, but are not limited thereto. In some embodiments, the transparent panel 100 can also be made of a transparent material other than glass. For example, the transparent panel 100 can be made of a transparent plastic material, which includes polyethersulphone (PES), polyacrylate (PAR), polyetherimide (PEI), polyethylene naphthalate (PEN), polyethylene terepthalate (PET), polyphenylene sulfide (PPS), polyallylate, polyimide, polycarbonate (PC), cellulose triacetate (TAC), cellulose acetate propionate (CAP), or combinations thereof.

The transparent panel for use in some embodiments of the present invention will be described with regard to a case where the transparent panel 100 is a glass panel. However, as described above, the present invention does not limit the type of the transparent panel 100 to the glass panel illustrated herein.

In a case where the transparent panel 100 is a glass panel, the glass panel can be made of soda-lime or aluminosilicate tempered glass. Further, the present invention does not limit the size of the transparent panel 100 to that illustrated herein, and the size of the transparent panel 100 varies according to the size of the main body 200. In one embodiment, the transparent panel 100 has a thickness of 1 mm (1T) or less, but is not limited thereto.

Referring to FIGS. 6 and 7, the plurality of microholes 110 formed in the transparent panel 100 are through-holes having a generally circular shape, but is not limited thereto. That is, the plurality of microholes 110 have shapes other than the circular shape, such as a rectangular shape or other suitable shape. Diameters of the plurality of microholes 110 are from 50 to 500 µm (e.g. from 50 to 499 µm, such as from 100 to 400 µm, for example, from 150 to 300 µm, such as 200 µm), and a distance between one microhole 110 and another microhole 110' is from 50 to 1000 µm (e.g. from 100 to 1000 µm, such as from 300 to 900 µm), that is, greater than the diameter of each of the microholes 110. Distances between each of the microholes 110 can be equal to each other. That is, the microholes 110 are distributed with the same density in a region where they are formed.

The microholes 110 are penetrated in a thickness direction of the transparent panel 100 and are capable of transmitting audio data generated from the speaker module 210 of the main body 200 to the outside.

Referring back to FIG. 5, the mobile device includes the transparent panel 100 having a thickness (e.g., a predetermined thickness) and including the plurality of microholes 110 formed at a side of the transparent panel 100, and the speaker module 210 formed at one side (e.g., a lower portion) of the transparent panel 100 and located to correspond to the plurality of microholes 110. The diameters of the microholes 110 are from 50 to 500 µm (e.g. from 50 to 499 µm, such as from 100 to 400 µm, for example, from 150 to 300 µm, such as 200 µm).

Referring to FIG. 5, the mobile device according to an embodiment of the present invention has the main body 200 formed at the lower portion of the transparent panel 100 formed in front of the upper portion of the main body 200. In the mobile device according to an embodiment of the present invention, the transparent panel 100 is the same as described above, and a repeated explanation thereof will be omitted.

In embodiments disclosed herein, the main body 200 of the mobile device includes the speaker module 210 and the display panel 220, which are formed toward the transparent panel 100.

The speaker module 210 is configured to generate a sound to transmit audio data to a user. The audio data is contained in multimedia data played by the mobile device. In particular, in a case where the mobile device is a mobile phone having a communication function, such as a smart phone, the audio data can be an incoming call ring tone, a received voice, or any other types of audio data. The main body 200 of the mobile device according to an embodiment of the present invention further includes a transmitting/receiving module (not shown) connected to the speaker module 210 and offering the audio data to the speaker module 210.

The speaker module 210 is isolated from the outside by the transparent panel 100 and can be protected from external shocks or foreign materials. In addition, as described above, since the plurality of microholes 110 is formed at a location corresponding to the speaker module 210 of the transparent panel 100, the sound generated from the speaker module 210 is allowed to pass through the plurality of microholes 110 to reach an external user without distortion or attenuation.

In one embodiment of the invention, the display panel 220 is a non-emissive display panel such as a liquid crystal display (LCD) or an electrophoretic display (EPD). In a case where the display panel 220 is a non-emissive display panel, a light source (not shown), such as a backlight assembly, is further be provided at a rear surface of the display panel 220.

In a further embodiment, the display panel 220 is a self-emissive display panel, such as an organic light emitting diode (OLED), a light emitting diode (LED), an inorganic electroluminescent display (EL), a field emission display (FED), a surface-conduction electron-emitter display (SED), a plasma display panel (PDP), or a cathode ray tube (CRT). In this case, a separate light source is not provided, unlike the non-emissive display panel.

The display panel 220, in one embodiment, displays the entire image data by controlling various pixels using internal drivers.

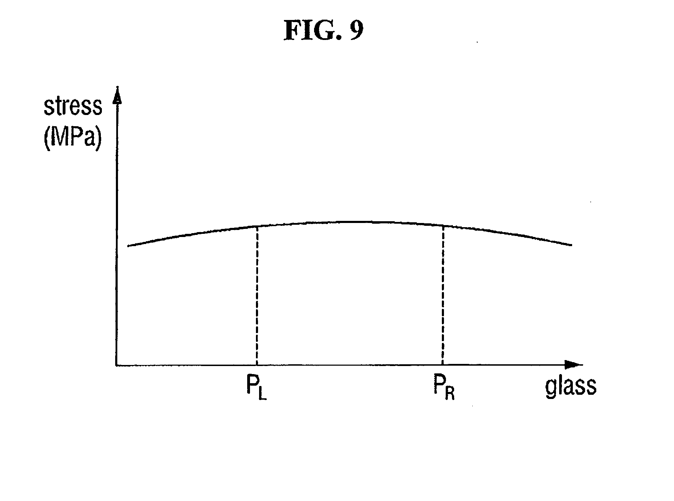

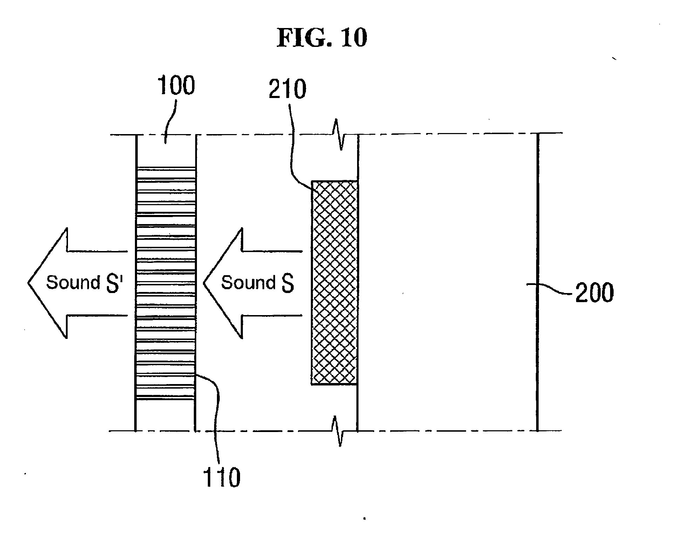

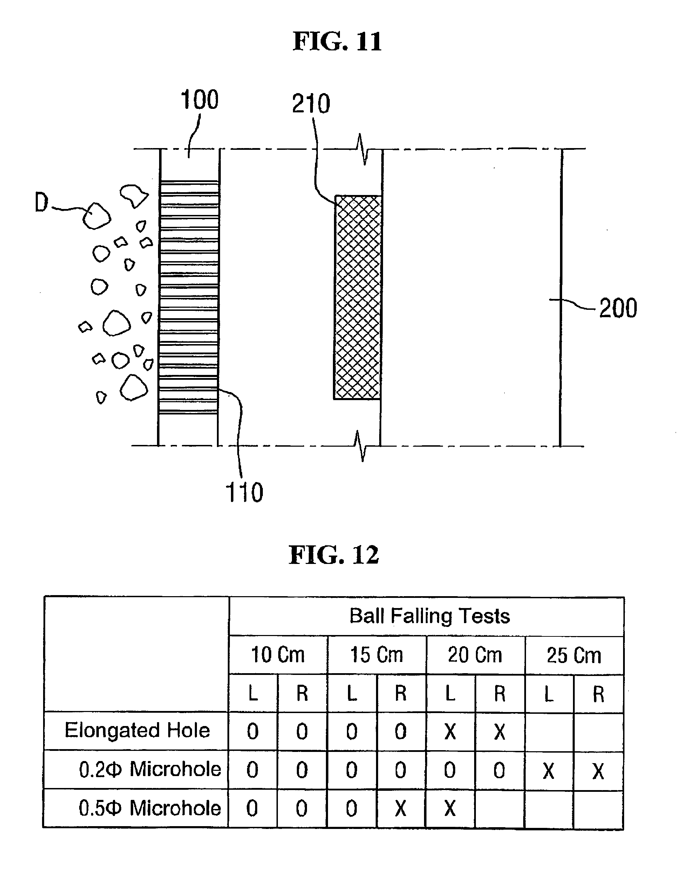

Stress distributions, an audio data propagation scheme, and foreign material blocking effect in the transparent panel 100 for a mobile device are further described below with reference to FIGS. 8 to 12. FIGS. 8 and 9 illustrate stress distributions of the transparent panel for a mobile device shown in FIG. 5. FIG. 10 is a schematic partial cross-sectional view of an audio data propagation scheme of the mobile device shown in FIG. 5. FIG. 11 is a schematic partial cross-sectional view of a foreign material blocking effect of the mobile device shown in FIG. 5. FIG. 12 is a table showing results of ball falling tests conducted on the transparent panel for a mobile device shown in FIG. 5.

Referring to FIGS. 8 and 9, stress distributions of the transparent panel 100 for a mobile device according to an embodiment of the present invention are illustrated. If an external force (F) is applied to the transparent panel 100, unlike in the conventional panel having a single hole, the stress is distributed to the plurality of microholes 110 in the transparent panel 100 according to an embodiment of the present invention, thereby preventing or substantially preventing the stress from concentrating at a point.

As shown in FIG. 9, the stress is not concentrated at the left end (P_{L}) and the right end (P_{R}) where the microholes 110 are formed but, rather, is distributed throughout the entire area of the transparent panel 100, thereby preventing or substantially preventing cracks from being generated at a particular point.

Referring to FIG. 10, a sound (S) generated from the speaker module 210 contained in the main body 200 passes through the plurality of microholes 110 formed in the transparent panel 100 to then be distributed to the outside as a sound (S'). In order to minimize or reduce a sound loss of the sound after passing through the microholes 110, sizes and distributions of the microholes 110 can be varied.

In a case where the diameters of the plurality of microholes 110 are 50 µm or less, the sound (S) does not pass through the microholes 110 but is blocked at an increasingly high rate. Thus, the sound (S) is attenuated on the whole, thereby lowering an audio volume or resulting in distortion of the sound.

Referring to FIG. 11, according to an embodiment of the present invention, foreign materials (D) distributed outside of the mobile device do not pass through the plurality of microholes 110 formed in the transparent panel 100, thereby preventing or substantially preventing the main body 200 in the transparent panel 100 from being damaged. That is, in a case where the diameters of the foreign materials (D) are greater than those of the microholes 110 of the transparent panel 100 of from 50 to 500 µm (e.g. from 50 to 499 µm, such as from 100 to 400 µm, for example, from 150 to 300 µm, such as 200 µm), the foreign materials (D) cannot pass through the transparent panel 100 but, rather, are blocked, thereby preventing or substantially preventing the foreign materials (D) from being introduced into the mobile device. In a case where the plurality of microholes 110 have diameters of 500 µm or greater, a probability of the foreign materials (D) being introduced into the mobile device is considerably increased, thereby reducing an anti-contamination effect of the transparent panel 100.

Referring to FIG. 12, results of shock tests conducted on the conventional transparent panel having a single hole (an elliptically elongated hole) in millimeters and the transparent panel 100 according to an embodiment of the present invention including a plurality of microholes are illustrated. The shock tests were carried out by dropping a scale weight having a predetermined weight to the left side (L) and the right (R) side of the hole in the transparent panel 100 to confirm whether cracks are generated in the transparent panel 100.

In the ball falling tests performed on the conventional transparent panel having the single elliptically elongated hole, while no cracks were observed when the scale weight was dropped at a height of 15 cm, cracks were observed from both left and right sides of the hole of the transparent panel when the scale weight was dropped at a height of 20 cm. That is, it was confirmed that the elliptically elongated hole could endure shocks when the shocks were applied at the maximum height of 15 cm.

Next, in the ball falling tests performed on the transparent panel 100 having the microholes 110, while no cracks were observed from the transparent panel 100 having the microholes 110 each having a diameter of 0.2 Φ (200 µm) when the scale weight was dropped at a height of 20 cm, cracks were observed from left and right sides of the microholes 110 of the transparent panel 100 when the scale weight was dropped at a height of 25 cm. That is, it was confirmed that the plurality of microholes 110 each having a diameter of 200 µm could withstand shocks when the shocks were applied at the maximum height of 20 cm.

Next, in the ball falling tests performed on the transparent panel 100 having the microholes 110, while no cracks were observed from the transparent panel 100 having the microholes 110 each having a diameter of 0.5 Φ (500 µm) when the scale weight was dropped at a height of 10 cm, cracks were observed from left sides of the microholes 110 of the transparent panel 100, and no cracks were observed from right sides of the microholes 110 of the transparent panel 100 when the scale weight was dropped at a height of 15 cm. That is, it was confirmed that the plurality of microholes 110 each having a diameter of 500 µm could withstand shocks when the shocks were applied at the maximum height of 10 cm.

The results of the tests stated above indicate the following findings. That is, the transparent panel 100 having the plurality of microholes 110 each having a diameter of 200 µm has excellent shock resistance compared to the transparent panel having a single hole. However, if the diameter of each of the plurality of microholes is greater than or equal to 500 µm, since stress concentrates on the plurality of microholes, the transparent panel having a plurality of microholes have lower shock resistance than the transparent panel having the single hole.

That is, if the diameters of the plurality of microholes 110 formed in the transparent panel 100 are maintained at from 50 to 500 µm, shock resistance can be improved by stress distribution, and a sound loss can be minimized or reduced. In addition, a separate foreign material blocking member is not required because external foreign materials can be prevented or substantially prevented from being introduced.

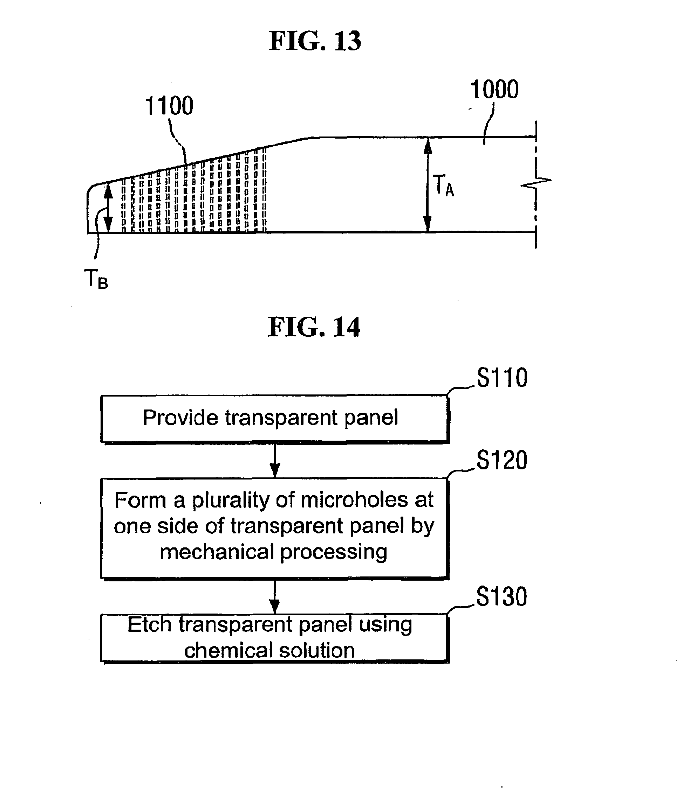

A transparent panel 1000 for a mobile device according to another embodiment of the present invention is described below with reference to FIG. 13. FIG. 13 illustrates a transparent panel for a mobile device according to another embodiment of the present invention.

The transparent panel 1000 for a mobile device according to another embodiment of the present invention is generally rectangular on the whole, and has a gradually decreasing thickness toward opposing edges of the transparent panel 1000. That is, unlike in the previously described embodiment, the thickness of the transparent panel 1000 varies throughout a region (e.g., the entire region) thereof. The transparent panel 1000 is configured such that an edge portion thickness (T_{B}) is smaller than a central portion thickness (T_{A}) thereof.

A plurality of microholes 1100 are formed at or near the edge portion of the transparent panel 1000, that is, at a region of the transparent panel 1000 having a reduced thickness. In this case, a new, aesthetically pleasing design is offered to a user, while demonstrating the same effects as in the previously described embodiment. In addition, when the mobile device is gripped by a user's hand, a sense of grip is improved by rounding a direct touch portion of the transparent panel 1000.

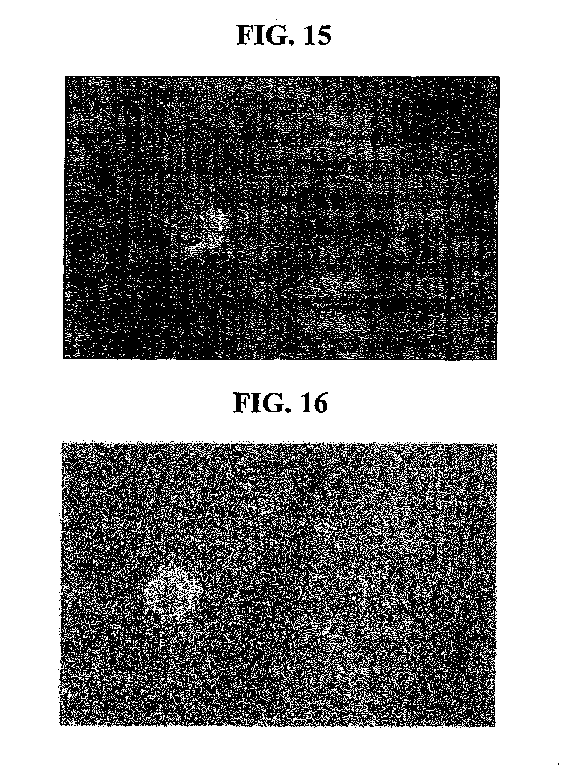

A method for manufacturing a transparent panel for a mobile device according to an embodiment of the present invention is described below with reference to FIGS. 14 to 16. FIG. 14 is a flowchart of a method for manufacturing a transparent panel for a mobile device according to an embodiment of the present invention, FIG. 15 is a photograph illustrating a task S120 of the method for manufacturing a transparent panel shown in FIG. 14, and FIG. 16 is a photograph illustrating a task S130 of the method for manufacturing a transparent panel shown in FIG. 14.

The method for manufacturing a transparent panel for a mobile device for use in an embodiment of the present invention includes providing a transparent panel having a thickness (e.g., a predetermined thickness) (S110), forming a plurality of microholes at a side of the transparent panel by mechanical processing (S120), and setting diameters of the plurality of microholes to be from 50 to 500 µm (e.g. from 50 to 499 µm, such as from 100 to 400 µm, for example, from 150 to 300 µm, such as 200 µm) by etching the plurality of microholes using a chemical solution.

First, in task S110, a transparent panel having a thickness (e.g., a predetermined thickness) is provided. As described above, the transparent panel has a thickness of 1 mm or less, which, in one embodiment, gradually decreases toward its opposing edges. The transparent panel, in one embodiment, is a glass panel. Alternatively, the transparent panel is a panel made of a transparent plastic material or other suitable material. In a case where the transparent panel is a glass panel, it is made of soda-lime glass or aluminosilicate tempered glass.

Next, in task S120, a plurality of microholes are formed at one side of the transparent panel by mechanical processing. The present invention does not limit the number or locations of microholes. Distances between the microholes, in one embodiment, are from 50 to 1000 µm (e.g. from 100 to 1000 µm, such as from 300 to 900 µm), and can optionally be equal to each other such that the microholes are distributed at an equal distance. In addition, as described above, the transparent panel is configured such that a thickness thereof gradually decreases toward its edge sides. In this case, the plurality of microholes can be formed at the edge sides.

The mechanical processing includes MEMS processing, laser processing, plasma processing, electron-beam processing, ion-beam processing, or any other suitable process. In addition, any processing can be used as the mechanical processing without limitation as long as the microholes each having the diameter described above are formed thereby.

Referring to FIG. 15 illustrating the transparent panel primarily manufactured by the aforementioned processing, enlarged images of microholes formed by mechanical processing are shown. In order to finally form microholes each having a diameter of from 50 to 500 µm (e.g. from 50 to 499 µm, such as from 100 to 400 µm, for example, from 150 to 300 µm, such as 200 µm), temporary microholes each having a diameter of half or about half of a finally desired diameter are formed in the first step of mechanical processing. For example, in the illustrated embodiment, in order to finally form microholes each having a diameter of 200 µm or about 200 µm, temporary microholes each having a diameter of 100 µm or about 100 µm are formed in the first step of mechanical processing.

Next, in task S130, the plurality of microholes are etched using a chemical solution to set the diameters of the plurality of microholes to be from 50 to 500 µm (e.g. from 50 to 499 µm, such as from 100 to 400 µm, for example, from 150 to 300 µm, such as 200 µm). The etching reduces surface roughness of the microholes. As a result of the etching, microhole surface texture sensed by the user can be enhanced. In addition, it is possible to prevent or substantially prevent the user from being injured by sharp edges, which are formed in the course of mechanical processing.

In the course of etching, the diameters of the microholes are increased. For example, the diameters of the microholes are increased to approximately twice as large as the microholes formed by the mechanical processing. Therefore, the temporary microholes each having a diameter of half or about half of a finally desired diameter are etched, thereby setting the diameters of the plurality of microholes to be from 50 to 500 µm (e.g. from 50 to 499 µm, such as from 100 to 400 µm, for example, from 150 to 300 µm, such as 200 µm).

Referring to FIG. 16 illustrating shapes of microholes formed in the transparent panel finally manufactured by the aforementioned processing, enlarged images of microholes having improved surface roughness as the result of etching are observed. Finally, diameters of the microholes are set to be from 50 to 500 µm (e.g. from 50 to 499 µm, such as from 100 to 400 µm, for example, from 150 to 300 µm, such as 200 µm). In the illustrated embodiment, the microholes have diameters of 200 µm or about 200 µm, which are increased by etching the temporary microholes each having a diameter of 100 µm or about 100 µm using a chemical solution, compared to the temporary microholes shown in FIG. 15.

As described above, according to the aforementioned method for manufacturing the transparent panel for a mobile device, external shocks are distributed, thereby providing the transparent panel for a mobile device having improved shock resistance and allowing distortion-free audio data to pass through the same while preventing or substantially preventing infiltration of foreign materials.

While the present invention has been described in connection with certain embodiments, it is to be understood that the invention is not limited to the disclosed embodiments, but, on the contrary, is intended to cover various modifications and equivalent arrangements included within the scope of the appended claims, and equivalents thereof.

## Claims

1. A mobile device comprising:
a transparent panel (100) having a thickness and a plurality of microholes (110) formed at a side of the transparent panel; and
a speaker module (210) arranged at a side of the transparent panel at a location corresponding to the plurality of microholes,
wherein a diameter of each of the microholes is from 50 to 500 µm.

2. The mobile device of claim 1, wherein the transparent panel is rectangular and has gradually decreasing thicknesses toward opposite edges of the transparent panel, optionally wherein the plurality of microholes are formed at the edges.

3. The mobile device of claim 1 or claim 2, wherein the thickness of the transparent panel is 1 mm or less; and/or
wherein the transparent panel is a glass panel made of soda-lime glass or aluminosilicate tempered glass.

4. The mobile device of any one of claims 1 to 3, wherein distances between microholes of the plurality of microholes are from 50 to 1000 µm; and/or
wherein distances between microholes of the plurality of microholes are substantially equal to one another.

5. The mobile device of any one of claims 1 to 4, further comprising a transmitting/receiving module connected to the speaker module and configured to offer audio data.

## Patentansprüche

1. Mobile Vorrichtung umfassend :
eine transparente Tafel (100) die eine Dicke und eine Vielzahl von Mikrolöchern (110) aufweist, die auf einer Seite der transparenten Tafel ausgebildet sind, und
ein Lautsprechermodul (210), das auf einer Seite der transparenten Tafel angeordnet ist, an einer Position, die der Vielzahl von Mikrolöchern entspricht,
**dadurch gekennzeichnet, dass** ein Durchmesser von jedem der Mikrolöcher 50 bis 500 µm beträgt.

2. Mobile Vorrichtung nach Anspruch 1, wobei die transparente Tafel rechteckig ist und allmählich abnehmende Dicken in Richtung entgegengesetzter Ränder der transparenten Tafel aufweist, wobei die Vielzahl der Mikrolöcher wahlweise an den Rändern gebildet wird.

3. Mobile Vorrichtung nach Anspruch 1 oder 2, wobei die Dicke der transparenten Tafel 1 mm oder weniger beträgt; und/oder
wobei die transparente Tafel eine Glastafel ist, die aus Kalknatronglas oder gehärtetem Aluminosilikatglas besteht.

4. Mobile Vorrichtung nach einem der Ansprüche 1 bis 3, wobei die Distanzen zwischen den Mikrolöchern der Vielzahl an Mikrolöchern zwischen 50 bis 1000 µm betragen; und/oder
wobei die Distanzen zwischen den Mikrolöchern der Vielzahl an Mikrolöchern im Wesenlichen gleich zueinander sind.

5. Mobile Vorrichtung nach einem der Ansprüche 1 bis 4, ferner umfassend ein mit dem Lautsprechermodul verbundenes Sende-/Empfängermodul, welches dazu konfiguriert ist, Audio-Daten anzubieten.

## Revendications

1. Dispositif mobile, comprenant :
un panneau transparent (100) ayant une épaisseur et une pluralité de microtrous (110) formés sur un côté du panneau transparent ; et
un module haut parleur (210) disposé sur un côté du panneau transparent au niveau d'un endroit correspondant à la pluralité de microtrous,
**caractérisé en ce qu'**un diamètre de chacun des microtrous est de 20 à 500 µm.

2. Dispositif mobile selon la revendication 1, dans lequel le panneau transparent est rectangulaire et a des épaisseurs diminuant graduellement vers les côtés opposés du panneau transparent, optionnellement dans lequel la pluralité de microtrous est formée sur les bords.

3. Dispositif mobile selon la revendication 1 ou 2, dans lequel l'épaisseur du panneau transparent et de 1 mm ou moins ; et/ou
dans lequel le panneau transparent est un panneau en verre fait de verre sodocalcique ou de verre trempé d'aluminosilicate.

4. Dispositif mobile selon l'une quelconque des revendicarions 1 à 3, dans lequel les distances entre les microtrous de la pluralité de microtrous est de 50 à 1000 µm ; et/ou
dans lequel les distances entre les microtrous de la pluralité de microtrous sont substanbtiellement égales les unes aux autres.

5. Dispositif mobile selon l'une quelqonque des revendications 1 à 4, comprenant en outre un module de transmission/réception connecté au module haut parleur et configuré pour offrir des données audio.
